# EUROPÄISCHE PATENTSCHRIFT

(11) **EP 2 061 666 B1**
(45) Veröffentlichungstag und Bekanntmachung des Hinweises auf die Patenterteilung: **15.09.2010**
(21) Anmeldenummer: 07817624.5
(22) Anmeldetag: 05.10.2007
(51) Int. Cl.: B60H 1/00

(54) **LEICHTE AUFDACHKLIMA- ODER/UND AUFDACHHEIZUNGSANLAGE**
LIGHTWEIGHT ROOF TOP AIR CONDITIONING AND/OR HEATING SYSTEM
INSTALLATION LEGERE DE CLIMATISATION ET/OU DE CHAUFFAGE SITUEE SUR LE TOIT

(30) Priorität: 06.10.2006 DE 102006047369
(43) Veröffentlichungstag der Anmeldung: 27.05.2009
(73) Patentinhaber: Konvekta AG, 34613 Schwalmstadt (DE)
(72) Erfinder: SCHÜTZ, Wolfgang, 34295 Edermünde (DE)
(74) Vertreter: Lindinger, Bernhard
(86) Internationale Anmeldenummer: PCT/DE2007/001782
(87) Internationale Veröffentlichungsnummer: WO 2008/040340

(56) Entgegenhaltungen:
- EP-A- 1 172 282
- DE-A1- 10 150 011
- DE-A1- 19 802 055
- DE-A1- 19 913 776
- DE-A1-102004 032 920
- US-A- 5 605 055
- US-A- 5 632 330
- US-A- 6 134 909
- US-B1- 6 339 934

## Beschreibung

### GEBIET DER TECHNIK

Die Erfindung bezieht sich gemäß dem Oberbegriff von Anspruch 1 auf eine Klima- oder / und Heizungsanlage für Fahrzeuge mit einem zum Positionieren aufdachs teils in oder ganz auf einem Fahrzeugdach ausgestalten Gehäuse, dass zumindest ein Bauelement der Klima- oder / und Heizungsanlage umhaust. Insbesondere bei großen Klima- oder / und Heizungsanlagen, wie zum Beispiel für Omnibusse oder Schienenfahrzeuge, werden derartige Klima- oder / und Heizungsanlagen verwendet.

Beim Positionieren aufdachs teils in einem Fahrzeugdach wird das Gehäuse in eine dafür vorgesehene Ausnehmung im Fahrzeugdach teilintegriert, so dass nur ein oberer Teil des Gehäuses über das Fahrzeugdach hinausragt.

Ein Bauelement einer Klima- oder / und Heizungsanlage ist ein Funktionsteil einer solchen Anlage, wie zum Beispiel eine Wärmetauscherbatterie, ein Gebläse, ein Kondensator, ein Kompressor oder eine Expansionseinrichtung zum Expandieren des Kältemittels.

Eine Wärmetauscherbatterie kann aus einem Verdampfer, aus einem Heizungswärmetauscher oder aus diesen beiden bestehen.

### STAND DER TECHNIK

Bei einer Klimaanlage verdichtet ein Kompressor ein gasförmiges Kältemittel und transportiert es über eine Leitung zu einem Kondensator. Der als Wärmetauscher dienende Kondensator wird durch Luft gekühlt, die mittels eines Gebläses über einen Lufteinlass angesaugt und über einen Luftauslass abgeführt wird. Dadurch verflüssigt sich das zunächst gasförmige und unter einem hohen Druck stehende Kältemittel. Das immer noch unter hohem Druck stehende, nunmehr flüssige Kältemittel wird über eine Leitung zu einer Expansionseinrichtung wie beispielsweise einer Drossel geführt, wodurch sich das Kältemittel entspannen kann. Durch das Entspannen geht das Kältemittel in den gasförmigen Zustand über und entzieht dabei der Umgebung Wärme. Dieser Wärmeentzug wirkt über einen als Wärmetauscher dienenden Verdampfer auf die Raumluft des zu kühlenden Fahrzeugraums. Die Raumluft wird dabei mittels eines Gebläses durch eine Einlassöffnung angesaugt, an den Verdampfer geleitet und so gekühlt durch entsprechende Öffnungen durch das Dach des Fahrzeugs in den zu kühlenden Fahrzeugraum geführt. Dadurch, dass das Kältemittel bei der Kühlung der Raumluft Wärme aufgnommen hat, ist es erwärmt worden. Es wird wieder zurück zum Kompressor geleitet und wieder komprimiert. Der Kühlkeislauf beginnt darauf erneut.

Bei einer Aufdachheizungsanlage wird ein für Fahrzeugheizungen bekannter Heizungswärmetauscher verwendet. Dieser erwärmt die mittels eines Gebläses über den Heizungswärmetauscher geführte und sodann durch Öffnungen im Fahrzeugdach in den Fahrzeugraum geleitete Luft.

Bei eine Kombination von Aufdachklima- und Aufdachheizungsanlage besteht beispielsweise eine Wärmetauscherbatterie aus einem Heizungswärmetauscher und aus einem Verdampfer.

Bekannt sind Klima- oder / und Heizungsanlagen mit einem auf einem Fahrzeugdach befestigten und aus Stahlblech oder aus stabilem Spritzgusskunststoff bestehen Gehäuse für zumindest einen Teil der Bauelemente der Klima- oder / und Heizungsanlage. Jedoch sind die derzeit für solche Aufdachgehäuse verwendeten Materialien wie Stahlblech oder stabiler Spritzkunststoff in der Herstellung recht kostenintensiv und nicht besonders leicht. Aber gerade bei einer auf oder von oben teils in einem Dach eines Fahrzeugs angebrachten Anlage muss besonders auf Gewichtsersparnis geachtet werden, denn es ist vor allem zur Vermeidung des Schwankens oder gar Umkippens des Fahrzeugs nachteilig, wenn der Schwerpunkt des Fahrzeugs aufgrund eines großen Dachgewichts hoch liegt.

In der deutschen Offenlegungsschrift DE 199 13 776 A1 ist eine Klimaanlage für vorzugsweise Schienenfahrzeuge offenbart, wobei sich das Gehäuse, das dort als Gerätewanne der Klimaanlage bezeichnet ist, im Dach des Fahrzeugs intergiert ist. Die dort offenbarten Gerätewanne besteht aus üblichen für Aufdachklimaanlagen verwendeten Materialien, wie Metall. So ist beispielsweise ein Verschweißen mit der Konstuktion des Bahnwagens offenbart. Auch in der US-Patentschrift US 5 632 330 ist eine Klimaanlage mit einem Aufdachgehäuse für Fahrzeuge nur aus herkömmlich verwendeten Material wie beispielsweise Metall oder stabilem Spritzkunststoff offenbart.

Die deutsche Offenlegungsschrift DE 198 02 055 A1 offenbart eine Heizungs- oder Klimaanlage eines Fahrzeugs, wobei wenigstens zwei Teile des Gehäuses der Anlage aus Kunststoffpartikelschaum hergestellt sind. Ferner offenbart die weitere deutsche Offenlegungsschrift DE 10 2004 032 920 A1 für Fahrzeuge ein Klimagerät mit Gehäuseschalen bestehend aus einem geschäumten Kunststoffmaterial. Jedoch handelt es sich bei den in den beiden Offenlegungsschriften offenbarten Klimaanlagen beziehungsweise Klimageräten, deren Gehäuse aus einem leichten und kostengünstigem Material bestehen, um keine Aufdachklima- oder / und Aufdachheizungsanlagen, so dass insbesondere die Aspekte der Materialverschlechterung durch Sonneneinstrahlung und der stabilen Montage auf dem Fahrzeugdach dort nicht berücksichtigt sind. Auch die in der deutschen Patentschrift DE 101 50 011 B4 offenbarte Befestigungskonstuktion am Fahrzeugdach, bei der ein spezieller am Fahrzeugdach befestigbarer Metalleinleger in einen Rahmen aus geschäumten Kunststoff teilintegriert ist, und der Rahmen dem Einfassen eines Verkleidungsdeckels für beispielsweise Schiebedächer dient, ist für die stabile Fahrzeugdachbefestigung eines Gehäuses einer Aufdachkima- oder / und Aufdachheizungsanlage allein schon wegen der deutlich größeren Stabilitätsanforderungen ungeeignet und auch nicht in DE 101 50 011 B4 für einen solchen Zweck gedacht. US 4 672 818 offenbart eine Klimaanlage nach dem Oberbegriff des Anspruchs 1.

Der Erfindung liegt daher die Aufgabe zugrunde, eine insbesondere hinsichtlich der Ersparnis von Gewicht und Herstellungskosten unter Berücksichtigung des Aspekts der Haltbarkeit des Gehäusematerials und dessen Befestigung auf einem Fahrzeugdach verbesserte Klima- oder / und Heizungsanlage für Fahrzeuge mit einem zum Positionieren aufdachs teils in oder ganz auf einem Fahrzeugdach ausgestalten Gehäuse, das zumindest ein Bauelement der Klima- oder / und Heizungsanlage umhaust, bereitzustellen.

### ZUSAMMENFASSUNG DER ERFINDUNG

Die Aufgabe wird durch eine Klima- oder / und Heizungsanlage für Fahrzeuge mit einem zum Positionieren aufdachs teils in oder ganz auf einem Fahrzeugdach ausgestalteten, zumindest ein Bauelement der Klima- oder / und Heizungsanlage umhausenden Gehäuse, wobei das Gehäuse zumindest teilweise aus geschäumtem Kunststoff besteht, zumindest ein Bereich der Gehäuseoberfläche mit einem gegen UV-Strahlung resistenten Material beschichtet ist und das aus geschäumten Kunststoff bestehende Gehäuse oder Gehäuseteil zumindest einen Teil zumindest eines mit für eine Befestigung des Gehäuses auf einem Fahrzeugdach oder in einer Ausnehmung des Fahrzeugdachs beitragend ausgestalten Einlegers enthält, gelöst.

Dadurch dass das zum Positionieren aufdachs teils in oder ganz auf einem Fahrzeugdach ausgestaltete Gehäuse der Klima- oder / und Heizungsanlage erfindungsgemäß zumindest teilweise aus geschäumtem Kunststoff besteht, ist die Herstellung einfach sowie kostengünstig und es ist auch besonders leicht. Deshalb liegt in vorteilhafter Weise der Schwerpunkt eines Fahrzeugs mit einer erfindungsgemäßen Klima- oder / und Heizungsanlage relativ niedrig, wobei insbesondere ein Schwanken oder gar die Gefahr des Umkippens des Fahrzeugs relativ gering ist.

Das Gehäuse enthält zumindest einen Teil zumindest eines Einlegers. Ein Einleger ist dabei ein mit dem Gehäuse verbundenes Element, das aus einem Material, welches stabiler als geschäumter Kunststoff ist, besteht. Die Verbindung des Einlegers mit dem Gehäuse ist durch eine Umschäumung mit dem geschäumten Kunststoff gegeben. Dadurch dass zumindest einer der Einleger für eine Befestigung des Gehäuses auf einem Fahrzeugdach oder in einer Ausnehmung des Fahrzeugdaches beitragend ausgestaltet ist, kann das Gehäuse ausreichend fest und sicher auf dem Fahrzeugdach oder in einer Ausnehmung des Dachs anmontiert werden. Vor allem brauchen dabei wegen der Einleger für die Befestigung nicht die besonderen Materialeigenschaften des geschäumten Kunststoffes berücksichtigt zu werden, sondern es können herkömmliche Befestigungssysteme Anwendung finden. Dadurch dass zumindest ein Bereich der Gehäuseoberfläche der erfindungsgemäßen Klima- oder / und Heizungsanlage mit einem gegen UV-Strahlung resistenten Material beschichtet ist, wird eine Beeinträchtigung wie beispielsweise eine Verwitterung des zumindest teilweise aus geschäumten Kunststoff bestehenden Gehäuses durch die auf das Fahrzeugdach einstrahlende Sonne verhindert. Für die Gehäusestabilität ist zumindest einer der Einleger zur Stabilisierung des Gehäuses beitragend ausgestaltet.

In den Unteransprüchen sind vorteilhafte Ausgestaltungen, Weiterbildungen und Verbesserungen des jeweiligen Gegenstandes der Erfindung angegeben.

Mit den Einlegern wird die Stabilität des Gehäuses erhöht, was vor allem bei Aufdachgehäusen auch aus Sicherheitsgründen eine Verbesserung darstellt. Des Weiteren können Einleger Halterungsfunktionen übernehmen, insbesondere dann, wenn für eine ausreichende Befestigung der geschäumte Kunststoff des Gehäuses nicht geeignet oder zu instabil ist. Halterungsfunktionen eines Einlegers, wie die Halterung eines Bauelements der Klima- oder / und Heizungsanlage, sind von Vorteil. Gerade bei einem Kompressor und einem Gebläse reicht oft allein eine entsprechende Formung des geschäumten Kunststoffes des Gehäuses nicht aus.

Für Einleger sind als Materialien besonders gut Metall oder stabiler Kunststoff geeignet. Diese Materialien lassen sich gut in die erwünschte Form bringen und wirken stabilisierend. Beispielsweise ist ein als Netz ausgebildeter Einleger aus Metall herstellbar.

Nach einer vorteilhaften Weiterbildung der vorliegenden Erfindung trägt der geschäumte Kunststoff des Gehäuses mit zur Halterung zumindest eines Bauelements der Klima- und / oder Heizungsanlage bei. Auf diese Weise können die Bauelemente ohne ein zusätzliches Haltegestell fixiert werden, was vor allem Gewicht, Kosten und Aufwand einspart.

Als geschäumter Kunststoff für das Gehäuse ist aufgrund seiner passenden Materialeigenschaften expandiertes Polypropylen (EPP) besonders gut geeignet.

Eine vorteilhafte Ausgestaltung der vorliegenden Erfindung ist eine Klima- oder / und Heizungsanlage, bei der das erfindungsgemäße Gehäuse als Umhausung zumindest eines Gebläses der Klima- oder / und Heizungsanlage dient. Die Positionierung des Gebläses auf dem Dach eines Fahrzeugs ist insbesondere zur Frischluftzufuhr von Vorteil.

Erfindungsgemäße Klima- oder / und Heizungsanlagen für Omnibusse oder Schienenfahrzeuge sind aufgrund der Größe der benötigten Anlagen und damit auch der erhöhten Relevanz der Gewichtseinsparung besonders vorteilhaft gegenüber dem derzeitigen Stand der Technik.

### KURZE BESCHREIBUNG DER ZEICHNUNGEN

Anhand der Zeichnungen werden Ausführungsbeispiele der Erfindung erläutert.

Es zeigen
- Fig. 1: eine schematische Darstellung eines Ausführungsbeispiels einer erfindungsgemäßen Klima- oder / und Heizungsanlage mit einem Gehäuse auf dem Dach eines Omnibusses;
- Fig. 2: eine schematische Darstellung eines Ausführungsbeispiels eines Teils eines Gehäuses mit Einleger für eine erfindungsgemäße Klima- oder / und Heizungsanlage;
- Fig. 3: eine schematische Darstellung eines Ausschnitts eines weiteren Ausführungsbeispiels eines Gehäuses mit auch der Befestigung auf einem Fahrzeugdach dienenden Einlegern einer erfindungsgemäßen Klima- oder / und Heizungsanlage;
- Fig. 4: eine schematische Darstellung eines weiteren Ausführungsbeispiels eines erfindungsgemäßen Gehäuses mit auch der Befestigung auf einem Fahrzeugdach dienenden Einlegern einer erfindungsgemäßen Klima- oder / und Heizungsanlage;
- Fig. 5: eine schematische Darstellung eines Ausführungsbeispiels eines Gehäuses mit einem Deckelteil und einem Verdampferkasten einer erfindungsgemäßen Klima- oder / und Heizungsanlage,
- Fig. 6: eine schematische Darstellung eines Ausführungsbeispiels eines Segments eines erfindungsgemäßen Gehäuses einer erfindungsgemäßen Klima- oder / und Heizungsanlage, und
- Fig. 7: eine schematische Darstellung eines weiteren Ausführungsbeispiels einer erfindungsgemäßen Klima- oder / und Heizungsanlage mit einem Gehäuse auf einem Fahrzeugdach.

### AUSFÜHRLICHE BESCHREIBUNG DER ERFINDUNG

In den Figuren bezeichnen gleiche Bezugszeichen gleiche oder funktionsgleiche Komponenten. Alle Zeichnungen sind schematisch zu verstehen. Auf maßstabsgetreue Abbildungen wurde zum Zwecke erhöhter Klarheit der Darstellung verzichtet.

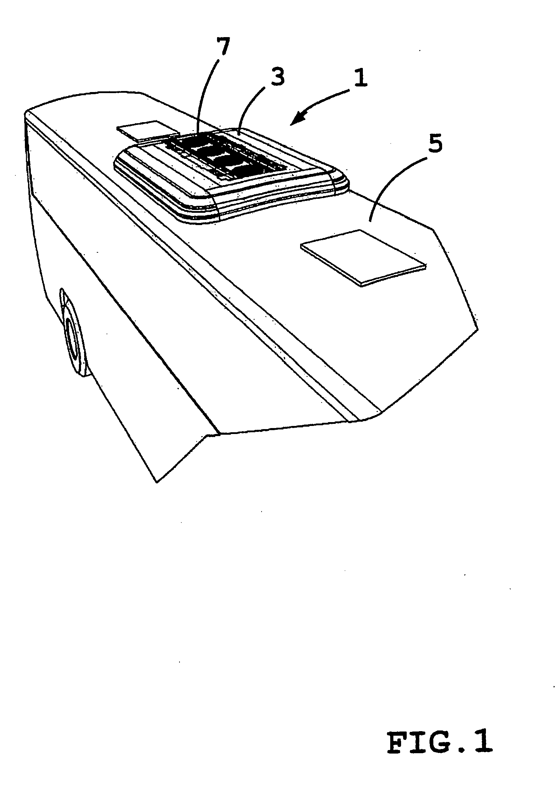

In **Figur 1** ist ein Ausführungsbeispiel einer erfindungsgemäßen Klima- oder / und Heizungsanlage 1 mit einem Gehäuse 3 auf dem Dach 5 eines Omnibusses schematisch dargestellt. Das erfindungsgemäß aus geschäumtem Kunststoff wie beispielsweise aus expandiertem Polypropylen (EPP) bestehende Gehäuse 3 umhaust als Bauelemente der Klima- oder / und Heizungsanlage 1 zumindest die als Verdampfer mit Heizungswärmetauscher ausgebildete Wärmetauscherbatterie, das Gebläse und die Kondensatoreinheit 7. Bauelemente der Klima- oder / und Heizungsanlage 1, die sich nicht im Gehäuse 3 befinden, können beispielsweise im Fahrzeuginneren untergebracht sein. Die Oberfläche des Gehäuses 3 ist mit einem für UV-Strahlung resistenten Material, wie beispielsweise einem Thermoplast (ASA), beschichtet.

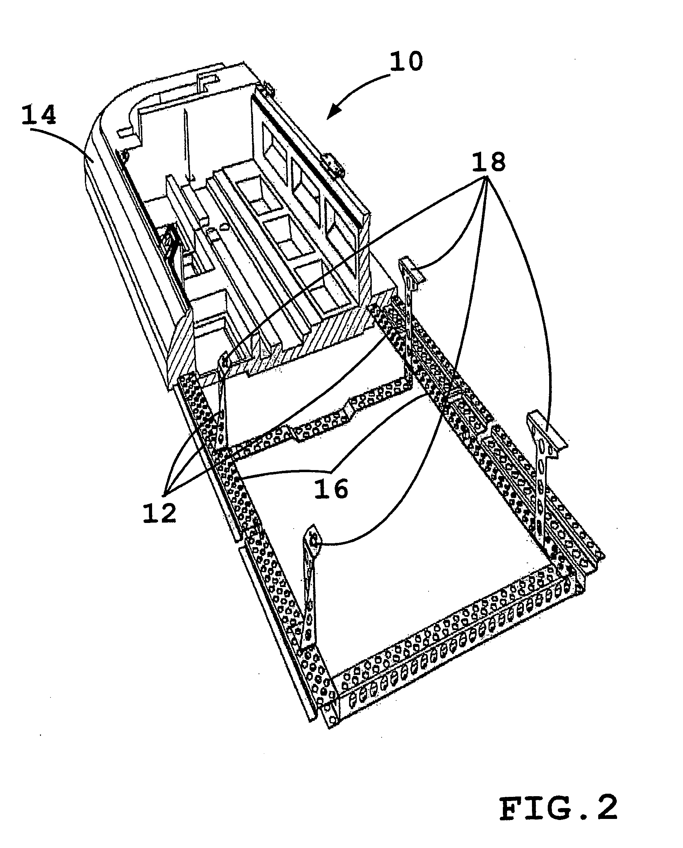

**Figur 2** zeigt schematisch ein Ausführungsbeispiel eines Teils 10 eines Gehäuses mit Einlegern 12 für eine erfindungsgemäße Klima- oder / und Heizungsanlage. Dieser als Verdampferkasten ausgestaltete Teil 10 des Gehäuses besteht aus EPP 14 als geschäumter Kunststoff und darin zum Teil enthaltene, metallische Einleger 12. Als Metall ist ohne Beschränkung der Allgemeinheit hier beispielsweise Aluminium vorgesehen. Die Einleger können aber auch aus anderen geeigneten Materialien, wie beispielsweise stabilem Kunststoff bestehen.

Die Einleger 12 sind in diesem Beispiel so ausgestaltet, dass sie zwei seitlichen Längsschienen 16 mit senkrecht darauf stehenden und jeweils in einem gewissen Abstand voneinander sich befindende Stützstreben 18 haben, die zum Abstützen eines hier nicht dargestellten Deckelteils des Gehäuses dienen.

Die beiden seitlichen Längsschienen 16 und die Stützstreben 18 der Einleger 12 sind in den Längsseiten des Verdampferkastens 10 eingeschäumt. Dieses wird in dem in der Figur 2 gestreift dargestellten Schnitt quer durch den geschäumten Kunststoff 14 des Verdampferkastens 10 verdeutlicht. Die Einleger 12 weisen eine Lochstruktur auf. Bei den Bereichen der Einleger 12, die im Gehäuse eingebunden sind, sind diese Löcher der Einleger 12 von EPP, oder einem anderen geeigneten geschäumten Kunststoff, durchschäumt. Damit sind die Einleger 12 besonders fest mit dem Gehäuse verbunden. Neben der Lochstruktur sind auch andere Ausformungen der Einleger 12 denkbar. Zum Beispiel kann ein Einleger 12 eine Netzstruktur aufweisen.

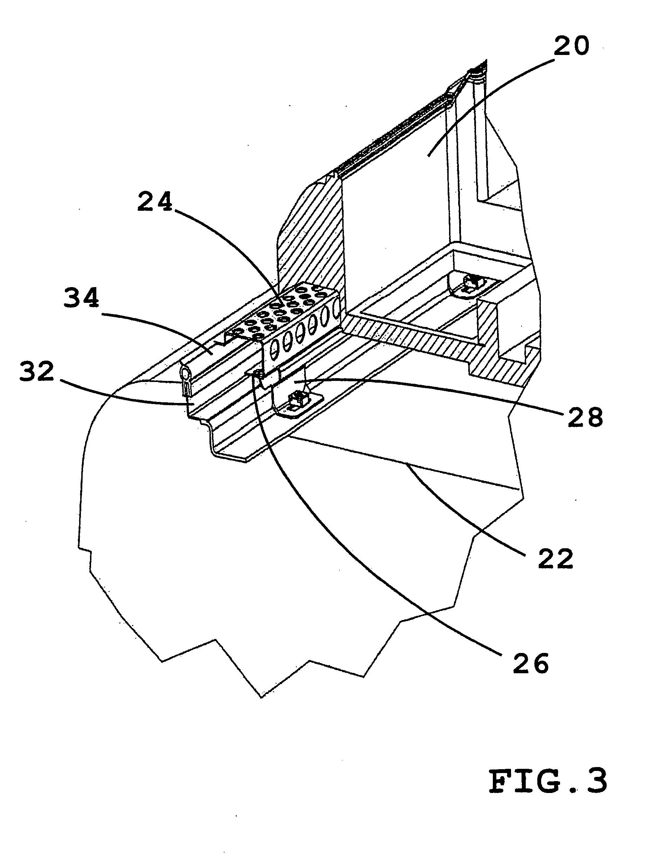

In **Figur 3** ist schematisch ein Ausschnitt eines weiteren Ausführungsbeispiels eines Gehäuses 20 mit auch der Befestigung auf einem Fahrzeugdach 22 dienenden Einlegern 24 einer erfindungsgemäßen Klima- oder / und Heizungsanlage dargestellt. In einer Längsseite des aus EPP bestehenden Gehäuses 20 ist im unteren Bereich ein schienenartiger, metallischer Einleger 24 mit Lochstruktur eingeschäumt. Dieses ist in dem in der Figur 3 gestreift dargestellten Schnitt quer durch den geschäumten Kunststoff des Gehäuses 20 offengelegt dargestellt.

Der Einleger 24 ist an der inneren Unterseite 28 mit Löchern zum Anschrauben von u-förmigen Haltebügeln 30 versehen. Diese Unterseite 26 liegt direkt an der Unterfläche des Gehäuses 20 der Klima- oder / und Heizungsanlage an. Der an dieser Unterseite 26 des Einlegers 24 angeschraubte Haltebügel 28 ist wiederum an der auf dem Dach 22 des Fahrzeugs befestigten Dachaufbauleiste 30 angeschraubt. Somit besteht durch diese Schraubverbindungen eine Fixierung des Gehäuses 20 der Klima- oder / und Heizungsanlage auf dem Fahrzeugdach 22. Je nach Art des auf dem Fahrzeugdach 22 vorliegenden Befestigungssystems sowie Typ des Fahrzeugs kann statt eines Haltebügels 28 ein anderes jeweils dazu passendes Verbindungselement am Einleger 24 angebracht sein.

An der Dachaufbauleiste 30 ist außen längsseits eine Schiene 32 mit L-Profil angebracht, die an ihrer oberen Kante eine Dichtungsleiste 34 aus Dichtungsgummi oder einem anderen abdichtenden Material aufweist. Auf dieser äußeren Dichtungsleiste 34 liegt das Gehäuse 20 der Klima oder / und Heizungsanlage auf, so dass es luft- und wasserdicht mit dem Fahrzeugdach 22 abschließt.
Zur Stabilisation des dort aufliegenden Bereichs des Gehäuses 20 erstreckt sich der eingeschäumte Einleger 24 mit seiner Außenseite über diesen Bereich.

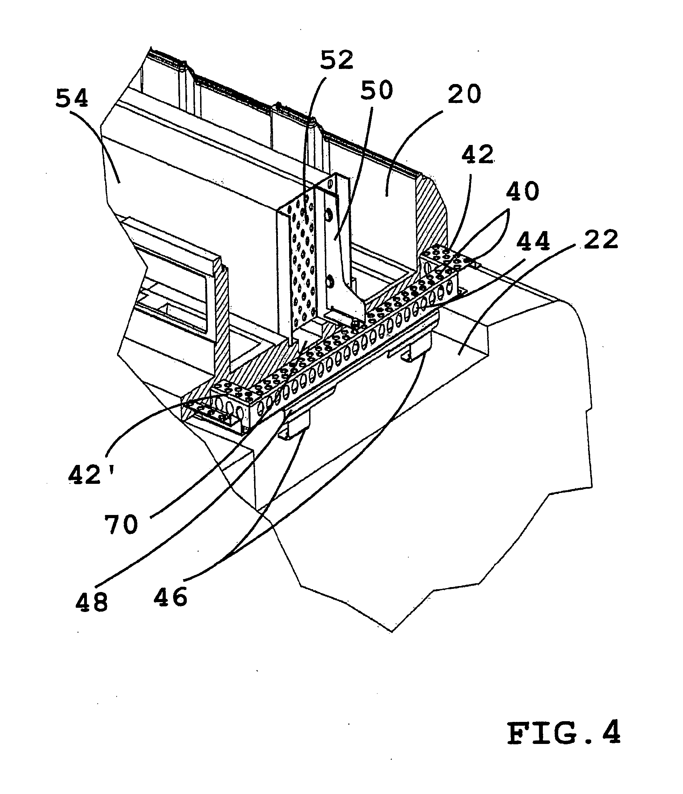

**Figur 4** zeigt schematisch einen Ausschnitt eines weiteren Ausführungsbeispiels eines erfindungsgemäßen Gehäuses 20 mit auch der Befestigung auf einem Fahrzeugdach 22 dienenden Einlegern 40 einer erfindungsgemäßen Klima- oder / und Heizungsanlage. Die Einleger 40 bestehen im wesentlichen aus in den geschäumten Kunststoff des Gehäuses 20 eingeschäumten Längsschienen 42, 42' und Querstreben 44. Dieses ist in dem in der Figur 4 gestreift dargestellten Schnitt quer durch den geschäumten Kunststoff des Gehäuses 20 offengelegt dargestellt. Die Einleger 40 weisen eine Lochstruktur auf, wobei die Löcher an der Oberseite und Unterseite der Einleger 40 für Schraubverbindungen geeignet ausgestaltet sind.

Die Unterseite einer Querstrebe 44 liegt direkt an der Unterfläche des Gehäuses 20 der Klima- oder / und Heizungsanlage an. Die an dieser Unterseite der Querstrebe 44 angeschraubte und mit Haltebügeln 46 versehene Verbindungsleiste 48 ist an der Unterseite der Haltebügel 46 an einem Dach 22 eines Fahrzeugs befestigten. Somit besteht durch diese Schraubverbindungen eine Fixierung des Gehäuses 20 der Klima- oder / und Heizungsanlage auf dem Fahrzeugdach 22.

Ferner ist ungefähr in der Mitte der Querstrebe 44 an dessen auf der inneren Oberfläche des Gehäuses 20 liegender Oberseite ein aus Metall, wie hier beispielsweise aus Aluminium, bestehender L-Winkel 50 mit rechteckigem Halteblech 52 angeschraubt. Das Halteblech 52 steht dabei senkrecht zur Querstrebe 44 des Einlegers 40 und weist einerseits aus Gründen der Gewichtsersparnis und andererseits zum Befestigen von Bauelementen der Klima- oder / und Heizungsanlage eine Lochstruktur auf. An dem Halteblech 52 ist als Bauelement eine im Gehäuse 20 eingesetzte Wärmetauscherbatterie 54 angebracht. Somit dient der Einleger 40 auch der Halterung von Bauelementen der erfindungsgemäßen Klima- oder / und Heizungsanlage, wobei die Form der Halterung nicht auf das hier dargestellte Ausführungsbeispiel beschränkt sein muss.

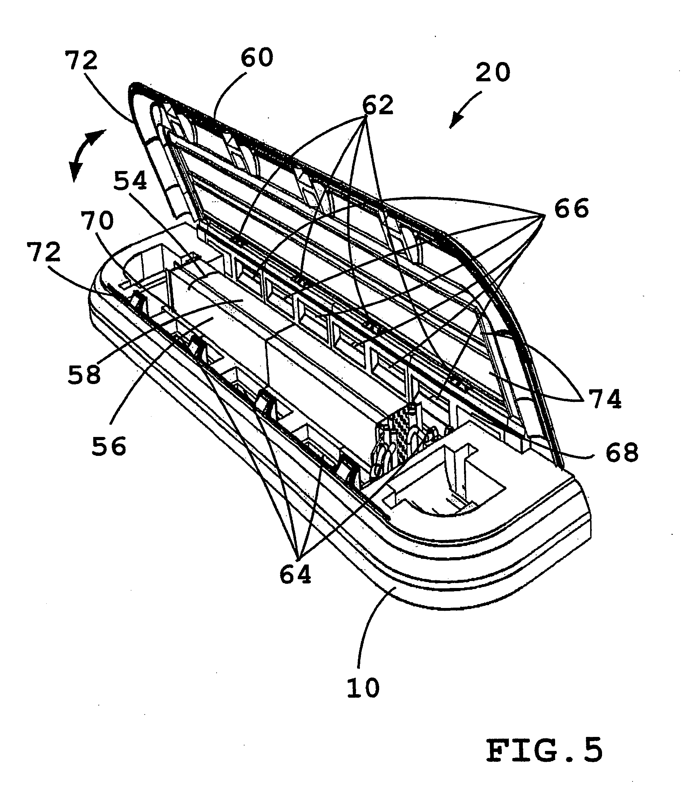

In **Figur 5** ist schematisch ein Ausführungsbeispiel eines Gehäuses 20 mit einem Deckelteil 60 und Verdampferkasten 10 dargestellt, das zwei aneinandergefügte Wärmetauschbatterien 54 einer erfindungsgemäßen Klima- oder / und Heizungsanlage enthält. Das Deckelteil 60 besteht aus EPP und ist ohne darauf beschränkt zu sein mit vier Scharnieren 62 an der oberen Längskante der Hinterwand 68 des ebenfalls aus EPP bestehenden Verdampferkastens 10 auf- und zuklappbar befestigt. Das Deckelteil 60 weist nach unten gewölbte Seitenränder auf und enthält entlang seiner unteren Kante ein Dichtungsgummi 72 zum luft- und wasserdichten Verschließen des Deckelteils 60 mit dem Verdampferkasten 10, der dafür ebenfalls ein entsprechendes Dichtungsgummi 72 am oberen Rand hat. Es können auch andere im Stand der Technik bekannte Dichtungsmaterialien verwendet werden. Ferner ist eine formschlüssige luft- und wasserdichte Abdichtung von Verdampferkasten 10 und Deckelteil 60 ohne Dichtungsmaterial denkbar.

Ferner weist das Deckelteil 60 auf seiner Innenseite im geschäumten Kunststoff rechteckige Ausnehmungen 74 auf, die im zugeklappten Zustand den in den Verdampferkasten 10 eingesetzten Wärmetauschbatterien 54 zusätzlichen Halt verleihen.

Des Weiteren hat der Verdampferkasten 10 im Boden innen und außen jeweils, ohne darauf beschränkt zu sein, sechs rechtwinklige Öffnungen 64 für die Luftab- und Luftzufuhr aus und in den Fahrzeuginnenraum, wobei die sechs inneren Öffnungen 64 in der Figur 5 durch die Perspektive der Darstellung zum größten Teil von den Wärmetauscherbatterien 54 verdeckt sind. Auch befinden sich noch weitere hier beispielsweise sechs rechteckige Öffnungen 66 der Klima- oder / und Heizungsanlage in der Hinterwand 68 des Verdampferkastens 10, durch die Frischluft von außerhalb angesaugt werden kann. Der geschäumte Kunststoff ist im Innenboden des Verdampferkastens 10 passgenau zum Einsetzen der Wärmetauscherbatterien 54 ausgeformt. Diese Ausnehmung 70 im Innenboden bietet den Wärmetauscherbatterien 54 zusätzlichen Halt. Der vordere Teil 56 der Wärmetauscherbatterien 54 ist in diesem Beispiel ein Heizungswärmetauscher und der hintere Teil 58 ein Verdampfer.

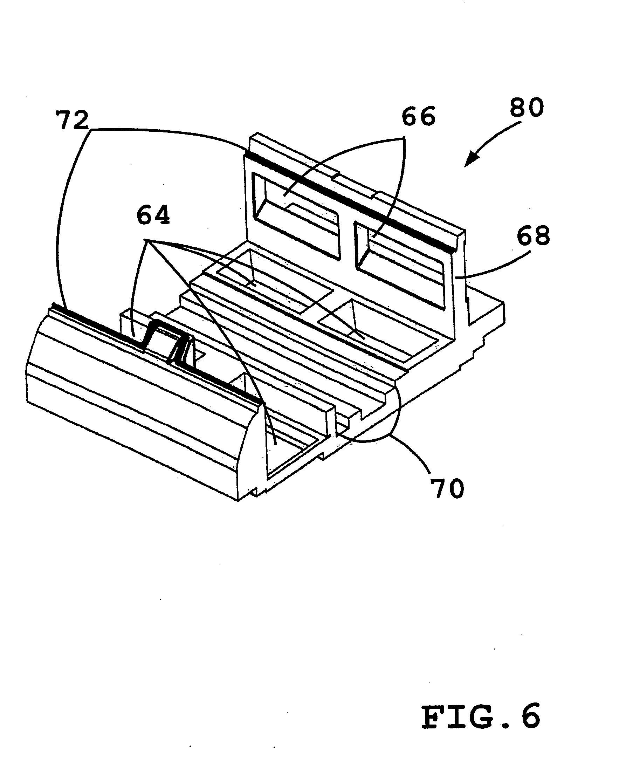

**Figur 6** zeigt schematisch ein Ausführungsbeispiel eines Segments 80 eines Gehäuses einer erfindungsgemäßen Klima- oder / und Heizungsanlage.

Ein Segment eines Gehäuses kann ein Gehäuseteil oder ein Gehäusemodul eines Gehäuseteils sein.

In diesem Fall handelt es sich um ein Gehäuseteilzwischenmodul 80 als Zwischenteil eines in Figur 5 dargestellten Verdampferkastens 10. Dieses Zwischenmodul 80 besteht erfindungsgemäß aus geschäumtem Kunststoff, wie beispielsweise EPP. In Längsrichtung liegt in der Mitte des Innenbodens eine Ausnehmung 70 für eine Wärmetauscherbatterie. Des Weiteren hat das Verdampferkastenzwischenmodul 80 im Boden innen und außen jeweils zwei rechtwinklige Öffnungen 64 für die Luftab- und Luftzufuhr aus und in den Fahrzeuginnenraum. Auch befinden sich für die Frischluftzufuhr von außerhalb noch weitere zwei rechteckige Öffnungen 66 der Klima- oder / und Heizungsanlage in der Hinterwand 68 des Zwischenmoduls 80. An den Oberkanten des Gehäuseteilzwischenmoduls 80 sind Dichtungsgummis 72 befestigt. Es können aber auch andere Dichtungsmaterialien verwendet werden, oder eine formschlüssige luft- und wasserdichte Aubdichtung ohne Dichtungsmaterial mit einem oben aufliegenden Gehäuseteil vorgesehen sein.

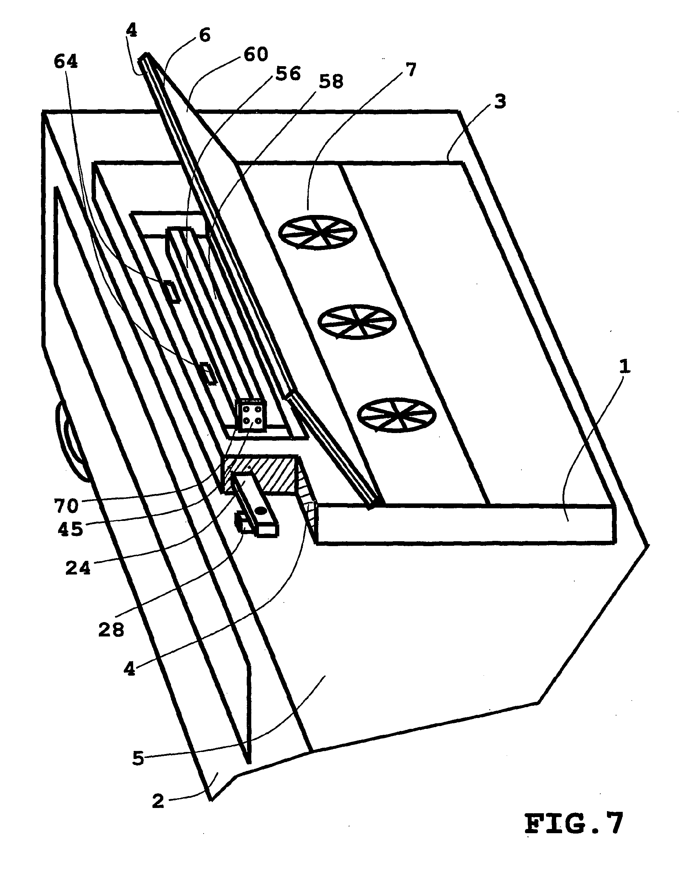

**Figur 7** zeigt eine schematische Darstellung eines Ausführungsbeispiels einer erfindungsgemäßen Klima- oder / und Heizungsanlage 1 mit einem Gehäuse 3 auf einem Fahrzeugdach 5.

Die zur Anlage 1 gehörende Wärmetauscherbatterie besteht dabei auf ihrer einen Seite aus einem Heizungswärmetauscher 56 und auf ihrer anderen Seite aus einem Verdampfer 58. Das Gehäuse 3 der Klima- oder / und Heizungsanlage 1 ist auf einem Dach eines Fahrzeugs 2, wie beispielweise einem Schienenfahrzeug oder einem Omnibus, befestigt. Es müssen jedoch nicht sämtliche Bauelemente der Aufdachklima- und / oder Aufdachheizungsanlage 1 im Gehäuse 3 auf dem Fahrzeugdach 5 integriert sein. Beispielsweise kann sich der Kompressor in der Nähe des Fahrzeugmotors befinden. In dem in Figur 7 dargestellten Beispiel befinden sich zumindest das Gebläse, die Wärmetauscherbatterie bestehend aus Verdampfer 58 und Heizungswärmetauscher 56 und der Kondensator 7 im Gehäuse 3 auf dem Dach 5 des Fahrzeugs 2. Das Gehäuse 3 besteht vorwiegend aus einem geschäumten Kunststoff 4, wie zum Beispiel expandiertes Polypropylen (EPP). Die Oberfläche des Gehäuses 3 ist zum Schutz mit einem gegen UV-Strahlung resistenten Material, wie beispielsweise einem Thermoplast (ASA), beschichtet. So besteht unter anderem die Unterseite des Deckels 60 der Verdampfereinheit aus geschäumtem Kunststoff 4 und die Oberseite aus einem gegen UV-Strahlung resistenten Material 6. In den geschäumten Kunstsoff 4 ist seitlich ein Einleger 24 eingeschäumt, der beispielsweise aus festem Kunststoff oder Metall besteht. Zur Sichtbarmachung dieses Einlegers 24 ist in Figur 7 bei der vordere linke Ecke des Gehäuses 5 ein entsprechender Schnitt dargestellt. Der Einleger 24 ist an ein Verbindungselement 28 befestigt, dass wiederum an dem Fahrzeugdach 5 angebracht ist, so dass der Einleger 24 zur Befestigung des Gehäuses 3 an dem Fahrzeugdach 5 beiträgt. Ferner erhöht der Einleger 24 die Stabilität des Gehäuses 5. An einem weiteren, teilweise in den geschäumten Kunststoff 4 des Gehäuses 5 integrierten Einleger 45 ist die Wärmetauscherbatterie besteht aus einem Heizungswärmetauscher 56 und einem Verdampfer 58 befestigt, wie beispielsweise durch eine Schraubverbindung. Zusätzlich gibt der Wärmetauscherbatterie eine passende Ausnehmung 70 in dem geschäumten Kunststoff 4 des Innenbodens des Gehäuses 3 Halt, so dass auch der geschäumte Kunststoff 4 des Gehäuses 3 zur Halterung dieser Bauelemente 56, 58 beiträgt.

Eine weitere Variante ist die Teilintegrierung des Gehäuses 3 aufdachs in das Fahrzeugdach 5, wobei bei der Befestigung in ähnlicher Weise wie oben geschildert zumindest ein Einleger 24 des Gehäuses 5 beiträgt.

Beispielsweise kann neben der Verdampfereinheit auch der Kondensator mit in dem Aufdachgehäuse aus geschäumtem Kunststoff der erfindungsgemäßen Klima- oder / und Heizungsanlage integriert sein.

Des Weiteren ist ein Gehäuse für eine erfindungsgemäße Klima- oder / und Heizungsanlage geeignet zur Umhausung zumindest eines Bauelements der Klima- oder / und Heizungsanlage, wobei das Gehäuse zum Positionieren aufdachs teils in oder ganz auf einem Fahrzeugdach (5, 22) ausgestaltet ist, zumindest teilweise aus geschäumtem Kunststoff besteht, zumindest ein Bereich der Gehäuseoberfläche mit einem gegen UV-Strahlung resistenten Material beschichtet ist und das zumindest teilweise aus geschäumten Kunststoff bestehende Gehäuse zumindest einen Teil zumindest eines mit für eine Befestigung des Gehäuses auf einem Fahrzeugdach oder in einer Ausnehmung des Fahrzeugdachs beitragend ausgestalten Einlegers enthält.

## Patentansprüche

1. Klima- oder / und Heizungsanlage (1) für Fahrzeuge (2) mit einem zum Positionieren aufdachs teils in oder ganz auf einem Fahrzeugdach (5, 22) ausgestalteten, zumindest ein Bauelement (7, 54) der Klima- oder / und Heizungsanlage (1) umhausenden, zumindest teilweise aus geschäumtem Kunststoff (4) bestehenden Gehäuse (3, 20) **dadurch gekennzeichnet, dass**
- zumindest ein Deckelteil (60) des Gehäuses (3, 20) zumindest teilweise aus geschäumtem Kunststoff (4) besteht,
- zumindest ein Bereich der Gehäuseoberfläche mit einem gegen UV-Strahlung resistenten Material (6) beschichtet ist,
- das Gehäuse (3, 20) oder ein Gehäuseteil (10) zumindest einen Teil zumindest eines mit für eine Befestigung des Gehäuses (3, 20) auf einem Fahrzeugdach (5, 22) oder in einer Ausnehmung des Fahrzeugdachs (5, 22) beitragend ausgestalten, aus einem stabileren Material als geschäumter Kunststoff bestehenden Einlegers (12, 24, 40) im geschäumten Kunststoff (4) enthält, und
- zumindest ein Einleger (12, 24, 40) zur Stabilisierung des Gehäuses (3, 20) beiträgt.

2. Klima- oder / und Heizungsanlage (1) nach Anspruch 1, wobei zumindest einer der Einleger (12, 24, 40) zur Halterung (50; 52) zumindest eines Bauelements (7, 54) der Klima- oder / und Heizungsanlage (1) beitragend ausgestaltet ist.

3. Klima- oder / und Heizungsanlage (1) nach Anspruch 1 oder 2, wobei der oder die Einleger (12, 24, 40) aus Metall oder stabilem Kunststoff besteht / bestehen.

4. Klima- oder / und Heizungsanlage (1) nach Anspruch 1, wobei der geschäumte Kunststoff (4) des Gehäuses (3, 20) mit zur Halterung zumindest eines Bauelements (7, 54) der Klima- und / oder Heizungsanlage (1) beitragend ausgeformt ist.

5. Klima- oder / und Heizungsanlage (1) nach Anspruch 1, wobei der geschäumte Kunststoff (4) des Gehäuses (3, 20) expandiertes Polypropylen (EPP) ist.

6. Klima- oder / und Heizungsanlage (1) nach Anspruch 1, wobei das Gehäuse (3, 20) als Umhausung für zumindest ein Gebläse der Klima- oder / und Heizungsanlage (1) ausgestaltet ist.

7. Klima- oder / und Heizungsanlage (1) nach einem der Ansprüche 1 bis 6, wobei das Gehäuse (3, 20) zum Positionieren auf einem Fahrzeugdach (5, 22) eines Omnibusses oder eines Schienenfahrzeugs ausgestalteten ist.

8. Klima- oder / und Heizungsanlage (1) nach einem der Ansprüche 1 bis 7, wobei das Gehäuse (3, 20) zum aufdachs Teilintegrieren in ein Fahrzeugdach (5, 22) eines Omnibusses oder eines Schienenfahrzeugs ausgestalteten ist.

9. Gehäuse (3, 20) für eine Klima- oder / und Heizungsanlage (1) umhausend zumindest ein Bauelement (7, 54) einer Klima- oder / und Heizungsanlage (1) nach Anspruch 1, wobei das Gehäuse (3, 20) zum Positionieren aufdachs teils in oder ganz auf einem Fahrzeugdach (5, 22) ausgestaltet ist, zumindest teilweise aus geschäumtem Kunststoff (4) besteht und wobei zumindest ein Deckelteil (60) geschäumten Kunststoff (4) enthält, zumindest ein Bereich der Gehäuseoberfläche mit einem gegen UV-Strahlung resistenten Material (6) beschichtet ist, das Gehäuse (3, 20) zumindest einen Teil zumindest eines mit für eine Befestigung des Gehäuses (3, 20) auf einem Fahrzeugdach (5, 22) oder in einer Ausnehmung des Fahrzeugdachs (5, 22) beitragend ausgestalten, aus einem stabileren Material als geschäumter Kunststoff bestehenden Einlegers (12, 24, 40) im geschäumten Kunststoff (4) enthält und zumindest ein Einleger (12, 24, 40) zur Stabilisierung des Gehäuses (3, 20) beiträgt.

## Claims

1. Air conditioning and/or heating system (1) for vehicles (2), having a housing (3, 20) which is designed for rooftop positioning partially in or entirely on a vehicle roof (5, 22), houses at least one component (7, 54) of the air conditioning and/or heating system (1) and is composed at least partially of foamed plastic (4),
**characterized in that**
- at least one cover part (60) of the housing (3, 20) is composed at least partially of foamed plastic (4),
- at least one region of the housing surface is coated with a material (6) which is resistant to UV radiation,
- the housing (3, 20) or a housing part (10) contains, in the foamed plastic (4), at least a part of at least one inlay (12, 24, 40) which is designed to contribute to the fastening of the housing (3, 20) on a vehicle roof (5, 22) or in a recess of the vehicle roof (5, 22) and which is composed of a more stable material than foamed plastic, and
- at least one inlay (12, 24, 40) contributes to the stabilization of the housing (3, 20).

2. Air conditioning and/or heating system (1) according to Claim 1, with at least one of the inlays (12, 24, 40) being designed to contribute to the retention (50; 52) of at least one component (7, 54) of the air conditioning and/or heating system (1).

3. Air conditioning and/or heating system (1) according to Claim 1 or 2, with the one or more inlays (12, 24, 40) being composed of metal or stable plastic.

4. Air conditioning and/or heating system (1) according to Claim 1, with the foamed plastic (4) of the housing (3, 20) being formed so as to also contribute to the retention of at least one component (7, 54) of the air-conditioning and/or heating system (1).

5. Air conditioning and/or heating system (1) according to Claim 1, with the foamed plastic (4) of the housing (3, 20) being expanded polypropylene (EPP).

6. Air conditioning and/or heating system (1) according to Claim 1, with the housing (3, 20) being designed as an enclosure for at least one fan of the air conditioning and/or heating system (1).

7. Air conditioning and/or heating system (1) according to one of Claims 1 to 6, with the housing (3, 20) being designed for positioning on a vehicle roof (5, 22) of an omnibus or of a rail vehicle.

8. Air conditioning and/or heating system (1) according to one of Claims 1 to 7, with the housing (3, 20) being designed for rooftop partial integration into a vehicle roof (5, 22) of an omnibus or of a rail vehicle.

9. Housing (3, 20) for an air conditioning and/or heating system (1), housing at least one component (7, 54) of an air conditioning and/or heating system (1) according to Claim 1, with the housing (3, 20) being designed for rooftop positioning partially in or entirely on a vehicle roof (5, 22), being composed at least partially of foamed plastic (4) and with at least one cover part (60) comprising foamed plastic (4), with at least one region of the housing surface being coated with a material (6) which is resistant to UV radiation, with the housing (3, 20) containing, in the foamed plastic (4), at least a part of at least one inlay (12, 24, 40) which is designed to contribute to the fastening of the housing (3, 20) on a vehicle roof (5, 22) or in a recess of the vehicle roof (5, 22) and which is composed of a more stable material than foamed plastic, and with at least one inlay (12, 24, 40) contributing to the stabilization of the housing (3, 20).

## Revendications

1. Installation de climatisation et/ou de chauffage (1) pour des véhicules (2), avec un boîtier (3, 20) composé au moins en partie de matière plastique expansée (4), enveloppant au moins un composant (7, 54) de l'installation de climatisation et/ou de chauffage (1) et configuré pour être positionné en toiture partiellement dans ou entièrement sur un toit de véhicule (5, 22), **caractérisée en ce que**
- au moins une partie de couvercle (60) du boîtier (3, 20) se compose au moins en partie de matière plastique expansée (4),
- au moins une zone de la surface du boîtier est revêtue d'une matière (6) résistant au rayonnement UV,
- le boîtier (3, 20) ou une partie de boîtier (10) contient, dans la matière plastique expansée (4), au moins une partie d'au moins un insert (12, 24, 40) composé d'une matière plus stable que la matière plastique expansée, configuré de façon à contribuer à la fixation du boîtier (3, 20) sur un toit de véhicule (5, 22) ou dans un évidement du toit de véhicule (5, 22), et
- au moins un insert (12, 24, 40) contribue à la stabilisation du boîtier (3, 20).

2. Installation de climatisation et/ou de chauffage (1) selon la revendication 1, dans laquelle au moins un des inserts (12, 24, 40) est configuré de façon à contribuer au support (50; 52) d'au moins un composant (7, 54) de l'installation de climatisation et/ou de chauffage (1).

3. Installation de climatisation et/ou de chauffage (1) selon la revendication 1 ou 2, dans laquelle le ou les insert(s) (12, 24, 40) est/sont constitué(s) de métal ou d'une matière plastique stable.

4. Installation de climatisation et/ou de chauffage (1) selon la revendication 1, dans laquelle la matière plastique expansée (4) du boîtier (3, 20) est façonnée de façon à contribuer au support d'au moins un composant (7, 54) de l'installation de climatisation et/ou de chauffage (1).

5. Installation de climatisation et/ou de chauffage (1) selon la revendication 1, dans laquelle la matière plastique expansée (4) du boîtier (3, 20) est du polypropylène expansé (EPP).

6. Installation de climatisation et/ou de chauffage (1) selon la revendication 1, dans laquelle le boîtier (3, 20) est réalisé sous la forme d'une enveloppe pour au moins une soufflante de l'installation de climatisation et/ou de chauffage (1).

7. Installation de climatisation et/ou de chauffage (1) selon l'une quelconque des revendications 1 à 6, dans laquelle le boîtier (3, 20) est configuré pour être positionné sur un toit de véhicule (5, 22) d'un autobus ou d'un véhicule ferroviaire.

8. Installation de climatisation et/ou de chauffage (1) selon l'une quelconque des revendications 1 à 7, dans laquelle le boîtier (3, 20) est réalisé en vue de son intégration partielle en toiture dans un toit de véhicule (5, 22) d'un autobus ou d'un véhicule ferroviaire.

9. Boîtier (3, 20) pour une installation de climatisation et/ou de chauffage (1), enveloppant au moins un composant (7, 54) d'une installation de climatisation et/ou de chauffage (1) selon la revendication 1, dans lequel le boîtier (3, 20) est configuré pour être positionné en toiture partiellement dans ou entièrement sur un toit de véhicule (5, 22), se compose au moins en partie de matière plastique expansée (4) et dans lequel au moins une partie de couvercle (60) contient une matière plastique expansée (4), au moins une zone de la surface du boîtier est revêtue d'une matière (6) résistant au rayonnement UV, le boîtier (3, 20) contient au moins une partie d'au moins un insert (12, 24, 40) constitué d'une matière plus stable que la matière plastique expansée et configuré de façon à contribuer à la fixation du boîtier (3, 20) sur un toit de véhicule (5, 22) ou dans un évidement du toit de véhicule (5, 22), et au moins un insert (12, 24, 40) contribue à la stabilisation du boîtier (3, 20).
